# EUROPEAN PATENT SPECIFICATION

(11) **EP 3 367 718 B1**
(45) Date of publication and mention of the grant of the patent: **13.09.2023**
(21) Application number: 17158517.7
(22) Date of filing: 28.02.2017
(51) Int. Cl.: H04W 12/08, G01D 4/00, H04W 12/06, H04L 9/40

(54) **AN AUTHORISATION SYSTEM AND A METHOD FOR AUTHORISING ACCESS IN AN ENERGY SMART METER SYSTEM**
AUTORISIERUNGSSYSTEM UND VERFAHREN ZUR ZUGANGSBERECHTIGUNG IN EINEM ENERGY ZÄHLERGERÄTESYSTEM
SYSTÈME D'AUTORISATION ET PROCÉDÉ D'AUTORISATION D'ACCÈS POUR UN SYSTÈME DE COMPTEURS D'ÉNERGIE INTELLIGENTS

(43) Date of publication of application: 29.08.2018
(73) Proprietor: Dansk Fjernaflæsning ApS, 9200 Aalborg SV (DK)
(72) Inventor: JACOBSEN, Rasmus Melchior, 9940 Læsø (DK)
(74) Representative: Guardian IP Consulting I/S

(56) References cited:
- US-A1- 2013 088 325
- US-A1- 2015 195 394
- US-A1- 2016 035 047

## Description

### Technical field

The present invention relates to a method and a system for authorising access, in particular for authorising access to a computer system, such as to a computer system comprising consumption data from meter systems.

### Background

Several methods for authorising access to computer systems are known. For some systems and methods for authorising access a multi-factor authentication is utilised. A multi-factor authentication is a method of computer access control in which a user (or a user profile) is granted access only after successfully presenting several separate pieces of evidence to an authentication mechanism, e.g. evidence based on knowledge and possession.

US20160035047A1 discloses methods, systems, and computer program products for managing energy meter usage feedback. According to US20160035047A1 a method includes detecting information generated by a prepaid energy meter that has been authorized for a given user; processing the detected information to determine an amount of energy consumption associated with the prepaid energy meter; generating a code based on said processing comprising encrypting (i) the determined amount of energy consumption, (ii) an identifier corresponding to the prepaid energy meter, and (iii) authentication information for the given user authorized to to use the prepaid energy meter; outputting the generated code for transmission to an energy provider associated with the prepaid energy meter; decrypting a recharge code for the prepaid energy meter received in response to validation of the generated code by the energy provider associated with the prepaid energy meter; and enabling a remote recharge operation of the prepaid energy meter based on said decrypting.

### Summary

The inventor of the present invention has realised a need for providing an improved method and system for authorising access utilising a meter system. This may be for, but may not be limited to, accessing a computer system comprising consumption data including consumption data from the meter system utilised for authorising access.

A meter system may comprise some identification that is accessible for the user of the meter system. However, there may be a risk that e.g. a previous user may have copied such identification. Accordingly, the inventors have realised a need for verifying that a user, who is attempting to have authorised access, also is physically present at the respective meter system.

Therefore, the inventor has realised a need in the industry to overcome the abovementioned and other shortcomings.

According to a first aspect of the present invention there is provided a method for authorising access by means of an authorisation system according to claim 1.

According to a further aspect of the present invention there is provided an authorisation system configured to authorise access according to claim 14.

The authorisation system comprises: {a portal system, an access evaluator, and an interface to a data system}. The data system may or may not form part of the authorisation system. The portal system is configured to interact with the access evaluator. The data system is configured to be provided, via one or more first communication channels, with consumption data from a plurality of meter systems comprising a first meter system. The consumption data comprises first consumption data from the first meter system. The data system comprises (or is configured to be provided with (e.g. provided via the one or more first communication channels)) identification information identifying the meter systems. The identification information comprises second primary verification information identifying the first meter system.

The method comprises obtaining, via a second communication channel and by means of the portal system, second primary access information being indicative of the first meter system.

The method comprises obtaining, via the second communication channel and by means of the portal system, first primary access information comprising at least part of the first consumption data from the first meter system.

The method comprises obtaining, by means of the second primary access information and the second primary verification information, first primary verification information relating to, or comprising, at least part of the first consumption data.

The method comprises comparing the first primary access information with the first primary verification information for determining whether to authorise access. Accordingly, there is provided a method, where a granted access may be indicative of (and/or may be given on basis of) present physical access to the first meter system.

The authorisation system is configured to obtain, via a second communication channel and by means of the portal system, second primary access information being indicative of the first meter system.

The authorisation system is configured to obtain, via the second communication channel and by means of the portal system, first primary access information comprising at least part of the first consumption data from the first meter system.

The authorisation system is configured to obtain, by means of the second primary access information and the second primary verification information, first primary verification information relating to, or comprising, at least part of the first consumption data.

The authorisation system is configured to compare the first primary access information with the first primary verification information for determining whether to authorise access. Accordingly, there is provided a system, where a granted access may be indicative of (and/or may be given on basis of) present physical access to the first meter system.

The authorisation system according to the present invention may be configured to carry out the method according to the present invention.

The present invention relates to different aspects including the method and the system described above and in the following. Each aspect may yield one or more of the benefits and advantages described in connection with one or more of the other aspects, and each aspect may have one or more embodiments with all or just some of the features corresponding to the embodiments described in connection with one or more of the other aspects and/or disclosed in the appended claims.

Other systems, methods and features of the present invention will be or will become apparent to one having ordinary skill in the art upon examining the following drawings and detailed description. It is intended that all such additional systems, methods, and features be included in this description, be within the scope of the present invention and protected by the accompanying claims.

### Brief description of the drawings

The above, as well as additional objects, features and advantages of the present inventive concept, will be better understood through the following illustrative and non-limiting detailed description of preferred embodiments and/or features of the present inventive concept, with reference to the appended drawings, where like reference numerals may be used for like elements.

The accompanying drawings are included to provide a further understanding of the invention, and are incorporated in and constitute a part of this specification. The drawings illustrate embodiments of the invention and, together with the description, serve to explain the principles of the invention. Other and further aspects and/or features may be evident from reading the following detailed description of the embodiments.

The drawings illustrate the design and utility of embodiments, in which similar elements may be referred to by common reference numerals. These drawings are not necessarily drawn to scale. In order to better appreciate how the above-recited and other advantages and objects are obtained, a more particular description of the embodiments will be rendered, which are illustrated in the accompanying drawings. These drawings may only depict typical embodiments and may therefore not be considered limiting of its scope.
Fig. 1 schematically illustrates a first embodiment of an authorisation system for authorising access.
Fig. 2 schematically illustrates a first embodiment of a method for authorising access.
Fig. 3 schematically illustrates a second embodiment of a method for authorising access.
Fig. 4 schematically illustrates an example of providing a first request prior to obtaining the first primary access information according to the present invention.
Fig. 5 schematically illustrates examples of obtaining first primary verification information according to the present invention.

### Detailed description

The method according to the present invention may be a computer-implemented method.

The method according to the present invention may be executed (and/or may be configured to be executed) by means of a computer system.

A computer system may for instance include any one or any combination of: {a server, a client, and a cloud-computing service}.

The authorisation system according to the present invention may be provided by means of any one or any combination of: {a computer program, a computer-readable medium, a computer program product, and a computing service}.

The present invention may comprise any one or any combination of: {a computer program, a computer-readable medium, a computer program product, and a computing service}, which comprises means for carrying out the method according to the present invention.

The present invention may comprise a computer program comprising instructions which, when executed by a computer system, causes the computer system to carry out the method according to the present invention.

The computer program product according to the present invention may be embodied a computer readable medium.

The present invention may comprise a computer-readable medium having stored a computer program according to the present invention.

The present invention may comprise a computer-readable medium comprising instructions which, when executed by a computer system, cause the computer system to carry out the method according to the present invention.

Any one or part of the {system, computer program, computer-readable medium, computer program product, computing service} according to the present invention may be distributed, e.g. over a plurality of physical entities and/or computational entities. For instance, the portal system may be partly distributed on e.g. a mobile device (which is used by the user for having access granted), and partly distributed on another computing system such as a cloud-computing service.

The present invention may be realised by means of a distributed computing system (which may be denoted "a distributed computing environment"), such as a computer network. Within such distributed computing system the method according to the present invention may be carried out by a plurality of entities, such as any combination of: {client computer, server computer, cloud computer}.

The present invention may be configured for authorising access to at least one or more parts of the data system, which one or more parts comprises information relating to consumption data of the first meter system.

The data system may be configured to be operated independently of the authorization system according to the present invention.

The present invention may be configured for authorising access to any computer system, such as a computer system, which is otherwise unrelated to the data system and to the consumption data of the first meter system.

According to the present invention, a user may attempt to have access granted/authorised. Accordingly, access may be granted to the user and/or an associated user profile, such as a consumer profile associated with the first meter system.

A user may attempt to have access authorised by means of an "accessing device", which may be understood as the device from which access is requested according to the present invention.

The access evaluator may be understood as the part of the authorisation system, which is configured to determine whether to authorise access.

The interface to the data system may be or may comprise a protocol for communication with the data system. The interface may enable exchange of data and/or information and/or request between the data system and the access evaluator and/or the authorisation system as such.

According to the present invention, access information (i.e. the first primary access information and the second primary access information) may be provided by a user. The user (or user profile) may (or may not) initially be authorised. However, the verification information (i.e. the first primary verification information and/or the second primary verification information) may be provided via a trusted channel or may be entered during an authorised setup of the first meter system with respect to the data system. Accordingly, the method and the system according to the present invention utilises the authenticated information available to the data system for verifying that the user has present and physical access to the first meter system. Accordingly, access may be authorised to the user (or the corresponding user profile).

The plurality of meter systems may comprise a second meter system.

Providing the data system with consumption data from the plurality of meter systems may be carried out based on request (e.g. from the data system and/or from the authorisation system and e.g. via the data system) to the meter systems to transfer the consumption data (also referred to as two-way communication). Alternatively, or additionally, the consumption data may automatically be provided (e.g. periodically) by the meter systems to the data system (also referred to as one-way communication).

The one or more first communication channels may comprise one or more wireless or wired links. The one or more first communication channels may comprise one or more intermediate nodes. In the case of two-way communication, the request for consumption data may for instance be initiated by the data system and/or authorisation system, or by any of the intermediate nodes on behalf of the data system and/or authorisation system.

The second communication channel may utilise a different or the same physical communication channel as the one or more first communication channels. A communication channel may refer to electronic communication between identified entities and using one or more identified protocols. The first and second communication channels as defined in the present disclosure may not be correlated with utilised physical means of communication.

When referring to "the meter systems" throughout the present disclosure, reference may be given to any: {one, more, or all} of the meter systems.

The first consumption data (or consumption data from any meter system) may comprise a plurality of measurements of consumptions or may comprise any data derived from such measurements. A measured consumption may comprise one or more specific values.

The first consumption data (or consumption data from any meter system) may comprise a plurality of measured values.

Obtaining the first consumption data via the one or more first communication channels may comprise obtaining one or more selected consumption data measurements measured by the first meter system.

A meter system (such as the first meter system) may comprise one measuring unit or a first plurality of measuring units (also referred to as "meters"). Some or all of the first plurality of measuring units may be provided as a single physical unit. Some or all of the first plurality of measuring units may be provided as separate physical units. Some or all of the first plurality of measuring units may be configured to measure different types of consumption. Some or all of the first plurality of measuring units may be configured to measure the same type of consumption.

The first meter system may comprise a first meter configured for measuring consumption. The first meter system may comprise one or more meters in addition to the first meter (i.e. a plurality of measuring units). For instance, the first meter system may comprise 1, 2, 3, 4, 5, 6, or more meters (i.e. units) in addition to the first meter (i.e. unit).

Each of the meter systems (and/or each unit of each meter system) may be configured for measuring consumption.

The portal system may be configured for interaction with the access evaluator via a third communication channel. Alternatively, or in combination, the portal system and the access evaluator may form part of a combined portal and access evaluator system. Alternatively, or in combination, the portal system may be configured for interaction and/or communication with the access evaluator via an intermediate system or node. Communication between the portal system and the access evaluator may include two-way communication.

The first consumption data may comprise data of one "unit of consumption", such as a unit being derived from one or more fundamental units from the International System of Units (i.e. an SI based unit). For instance, a unit of consumption may be in terms of kilowatt hour.

The first meter system may be configured to measure consumption relating to any one or combination of: {electricity; water; heating; cooling; gas and pressure}. The first meter system may for instance be configured to measure: {electricity; or water; or "electricity and water"}.

The first primary access information may include only a part of a complete reading of the first meter system. For instance, if a complete reading comprises "Y" number of digits, then a first reading may include only the last "X" number of digits, where X is smaller than Y. X may for instance be 2, 3, 4, or more. Y may for instance be 3, 4, 5, 6, 7, 8, or more. This may in particular be relevant for the first primary access information, where, for instance, the last 2, 3, 4, or more digits of a reading (e.g. from a display) may be adequate for verifying that a user does in fact have access to the meter and that access therefore should be authorised. The last digits may in the present context be understood as the last digits prior to a decimal point/comma.

The portal system may comprise a web portal and/or an application configured for a computing device (e.g. a mobile computing device).

The second primary verification information may be defined within the data system during configuration of the first meter system for operation with the data system. For instance a serial number and/or a location of the first meter system may be stored within the data system during the configuration. Alternatively, or in combination, the second primary verification information may be obtained partly, or in full, from the first meter system via the one or more first communication channels.

The data system may be configured for communication with a plurality of meter systems including the first meter system. Accordingly, it may be an advantage to compare the second primary access information with the second primary verification information for identifying and/or obtaining data related to the first meter system within the data system.

Once access has been authorised, the authorisation may be valid for a predefined time or period, such as until an active or passive logout. In addition, any access attempts with respect to the first meter system may be denied, or handled according to a different authorisation system, e.g. until such active or passive logout.

The method may comprise providing (and/or the authorisation system may be configured to provide) a first request prior to obtaining the first primary access information. The first request may be provided after obtaining the second primary access information. The first request may be provided to the accessing device (e.g. mobile device) used for providing the second primary access information. The first request may be provided via the second communication channel. The first request may be provided by means of the second primary access information. The first request may furthermore be provided by means of the second primary verification information. The first request may be presented to the user, e.g. by means of the accessing device. The first request may be generated by the authorisation system.

The second primary verification information may comprise first primary identifier based information of the first meter system. The second primary access information may comprise second primary identifier based information of the first meter system.

Identifier based information may be understood as information, which is based on an identifier, i.e. an identifier of the relevant meter system. "Primary identifier based information may be understood as information based on the first identifier, i.e. an identifier of the first meter system.

The first primary identifier may comprise a unique identifier. The first primary identifier may for instance comprise a number being associated with the first meter system, such as a serial number of the first meter system.

The first primary identifier based information may be identical to the second primary identifier based information.

Identifier based information may identify or comprise information of the relevant meter system, or specifically a particular unit in the relevant meter system.

The second primary access information may comprise information of or extracted from a first primary identifier configured to identify the first meter system.

The first primary identifier may identify the first meter system. Furthermore, the first primary identifier may identify one or more particular units of the first meter system. For instance, if the first meter system comprises: {a heat meter and a water gauge}, and if the second primary access information identifies the water gauge, then a user trying to have access granted may e.g. by own motion or by request provide first primary access information which relates to consumption data from: {the heat meter, or the water gauge, or both the heat meter and the water gauge}.

The second primary verification information may comprise first primary location based information of, or relating to, the first meter system. The second primary access information may comprise second primary location based information of, or relating to, the first meter system.

Primary location based information may refer to information relation to the location of the first meter system.

Location based information may comprise location based coordinates, such as gps coordinates.

Location based information may comprise an address.

The first meter system may comprise, or may be configured to provide, a machine-readable representation of data comprising any one of or any combination of: {at least part of the first consumption data; the first primary access information; and the second primary access information}.

The machine-readable representation of data may be situated on or integrated with a meter of the first meter system.

The first meter system may comprise one or more displays configured to display any one of or any combination of: {at least part of the first consumption data; the first primary access information; the second primary access information; and the machine-readable representation of data}.

The machine-readable representation of data may comprise a barcode. The barcode may comprise a matrix barcode, such as a QR code. The barcode may be a fixed barcode, e.g. printed on a label or directly on a meter of the first meter system. The barcode may be accessible via the one or more displays of the first meter system.

The machine-readable representation of data may comprise information readable by means of radio frequencies. The information readable by means of radio frequencies may be readable by means of e.g. NFC, RFID or Bluetooth.

The method may comprise obtaining (and/or the authorisation system may be configured to obtain) a first time relating to the first primary access information. The first time may be relating to a measurement time or observation time relating to the first consumption data or part thereof as provided via the second communication channel. The first time may be associated with a time of obtaining the first primary access information and/or the second primary access information (at the portal system), such as a time of obtaining the first primary access information. The first time may comprise a first time stamp.

The method may comprise utilising (and/or the authorisation system may be configured to utilise) the first time for comparing the first primary access information with the first primary verification information and/or for obtaining the first primary verification information.

The method may comprise obtaining (and/or the authorisation system may be configured to obtain) a second time relating to the first primary verification information. The second time may be relating to a measurement time relating to the first consumption data. The second time may comprise a second time stamp. Obtaining the first primary verification information may comprise obtaining at least one second time (such as at least one time stamp) relating to the first primary access information. The method may comprise utilising (and/or the authorisation system may be configured to utilise) the first time and the second time for comparing the first primary access information with the first primary verification information.

Obtaining the first primary access information and/or the second primary access information may comprise obtaining at least one photo of a first part of the first meter system. The first part of the first meter system may comprise at least a part of the one or more displays of the first meter system. For instance, by means of a photo of the first part of the first meter system, it may be that an identifier (such as a serial number) of the first meter system (or of a unit of the first meter system) may be recognisable whereas consumption data may not be recognisable. The at least one photo may comprise geo-tagging information or another kind of location-based information. The at least one photo may be obtained via the second communication channel and by means of the portal system. Alternatively, or in combination, the first primary access information and/or the second primary access information may be extracted from the at least one photo prior to being obtained via a second communication channel and by means of the portal system.

Comparing the first primary access information with the first primary verification information may comprise determining whether a first data value is equal to or within a pre-set limit of a second data value, wherein:
- the first data value may be extracted or derived from the first primary access information, and/or
- the second data value may be extracted or derived from at least part of the first consumption data.

The pre-set limit may be a specific fraction/percentage, such as +/- {25, 20, 15, or 10} %.

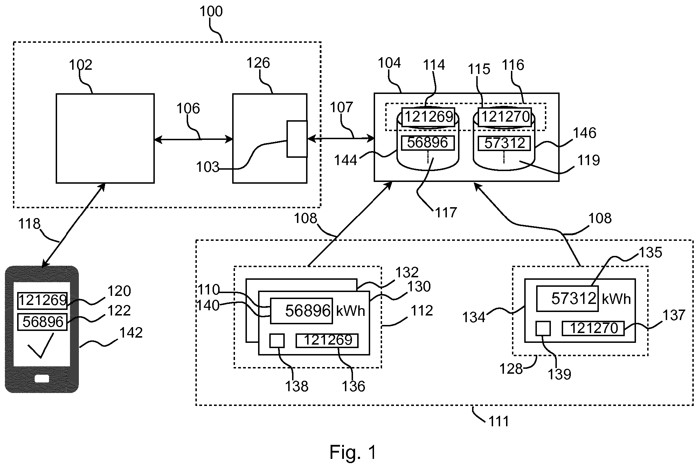

Fig. 1 schematically illustrates a first embodiment of an authorisation system 100 for authorising access. The authorisation system 100 comprises: {a portal system 102, an access evaluator 126, and an interface 103 to a data system 104}. The interface 103 is illustrated as a part of the access evaluator 126. The interface 103 enables exchange 107 of data and/or information and/or request between the data system 104 and the access evaluator 126. The portal system 102 is configured to interact (illustrated by means of the double-arrow 106) with the access evaluator 126. The data system 104 is configured to be provided, via one or more first communication channels 108, with consumption data from a plurality of meter systems 111 comprising a first meter system 112. The plurality of meter systems 111 comprises a second meter system 128. The consumption data comprises first consumption data 110 from the first meter system 112. The number indicated within the box with ref. 110 is a mere example of a measured consumption value from the respective meter followed by the pre-fix kWh, i.e. an example of unit of consumption, (likewise is indicated within the box of ref. 135). The data system 104 comprises (or for one or more other embodiments is being configured to be provided with, via the one or more first communication channels 108) identification information 116 identifying the meter systems 111. The identification information 116 comprises second primary verification information 114 identifying the first meter system 112. Furthermore, the identification information 116 comprises second secondary verification information 115 identifying the second meter system 128.

The number indicated within the box with ref. 114 is a mere example of a serial number from the meter 130, which serial number is identical to the representation (also serial number) within the box with ref. 136. Likewise applies for the box with ref. 115 and the relation to the box with ref. 137.

The authorisation system 100 is configured to obtain, via a second communication channel 118 and by means of the portal system 102, second primary access information 120 being indicative of the first meter system 112.

The authorisation system 100 is configured to obtain, via the second communication channel 118 and by means of the portal system 102, first primary access information 122 comprising at least part of the first consumption data 110 from the first meter system 112.

The authorisation system 100 is configured to obtain, by means of the second primary access information 120 and the second primary verification information 114, first primary verification information relating to, or comprising, at least part of the first consumption data 110.

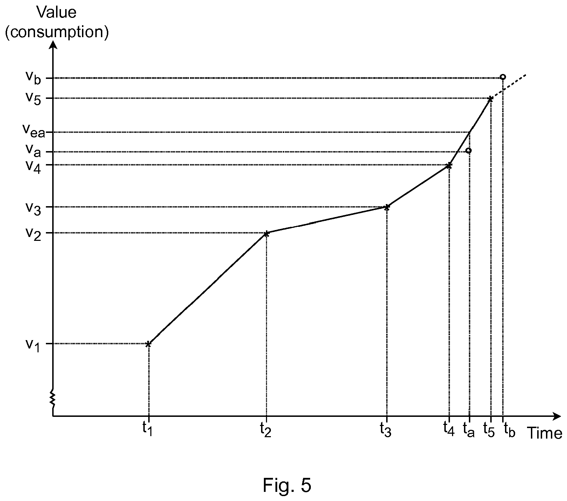

The first primary verification information is obtained by extracting a consumption value from the first meter system,or the first primary verification information is a derived value from consumption data of the first meter system as accessible by the data system. For instance, the first primary verification information may comprise an extrapolated consumption data value or otherwise estimated consumption data value. This is explained further in connection with Fig. 5.

The authorisation system 100 is configured to compare the first primary access information 122 with the first primary verification information for determining whether to authorise access. The access evaluator 126 is utilised for this comparison.

The first meter system 112 comprises a first primary meter 130 and a second primary meter 132.

The second meter system 128 comprises a first secondary meter 134.

The second primary verification information 114 comprises first primary identifier based information (i.e. for this case: a serial number) of the first meter system 112, and the second primary access information 120 comprises second primary identifier based information (i.e. for this case: a serial number) of the first meter system 112. For the situation illustrated in Fig. 1 the first primary identifier based information is the same as the second primary identifier based information. Furthermore, both are the same as the serial number 136 located on the first primary meter 130.

The first meter system 112 comprises a machine-readable representation of data 138 comprising a barcode, such as a QR code. The second meter system 128 comprises a machine-readable representation of data 139 comprising a barcode. Each respective barcode comprises information identifying the respective meter system.

The first meter system comprises a display 140 configured to display first consumption data 110.

The first primary access information 122 and the second primary access information 120 are provided by means of an accessing device 142, such as by means of an app on a mobile device as illustrated.

The data system 104 comprises a database for each meter system, including a first database 144 for the first meter system 112 and a database 146 for the second meter system 128. Each database may comprise a plurality of measurement values 117, 119. Additional information, such as a related measurement times may as well be stored within the relevant databases. The databases 144 and 146 may be integrated as one database.

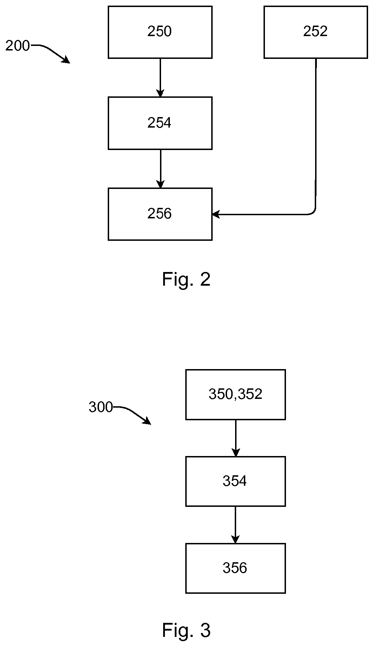

Fig. 2 schematically illustrates a first embodiment of a method 200 for authorising access by means of an authorisation system. The authorisation system may be as described in connection with Fig. 1. The authorisation system utilised by the method of Fig. 2 comprising a portal system, an access evaluator, and an interface to a data system, the portal system being configured to interact with the access evaluator, the data system being configured to be provided, via one or more first communication channels, with consumption data from a plurality of meter systems comprising a first meter system, the consumption data comprising first consumption data from the first meter system, the data system comprising, or being configured to be provided with, via the one or more first communication channels, identification information identifying the meter systems, the identification information comprising second primary verification information identifying the first meter system.

The method 200 of Fig. 2 comprising:
- obtaining 250, via a second communication channel and by means of the portal system, second primary access information being indicative of the first meter system;
- obtaining 252, via the second communication channel and by means of the portal system, first primary access information comprising at least part of the first consumption data;
- obtaining 254, by means of the second primary access information and the second primary verification information, first primary verification information relating to, or comprising, at least part of the first consumption data; and
- comparing 256, using the access evaluator, the first primary access information with the first primary verification information for determining whether to authorise access.

Fig. 3 schematically illustrates a second embodiment of a method 300 for authorising access by means of an authorisation system. The method 300 of Fig. 3 is similar to the method 200 of Fig. 2 and utilises the same authorisation system. The method 300 comprising:
- obtaining 350, via a second communication channel and by means of the portal system, second primary access information being indicative of the first meter system;
- obtaining 352, via the second communication channel and by means of the portal system, first primary access information comprising at least part of the first consumption data;
- obtaining 354, by means of the second primary access information and the second primary verification information, first primary verification information relating to, or comprising, at least part of the first consumption data; and
- comparing 356, using the access evaluator, the first primary access information with the first primary verification information for determining whether to authorise access.

As illustrated in Fig. 3, step 350 and step 352 are effectuated as one step. For instance, a user may provide both the second primary access information and the first primary access information at the same time (or without further interaction in between 350 and 352). Step 350 and step 352 may for instance be effectuated as one step if a photo of both a consumption reading (value) and a serial number is provided. Similarly if a user is providing both the first primary access information and the second primary access information, one after the other, without further interaction with the authorisation system, e.g. using an app or a web interface.

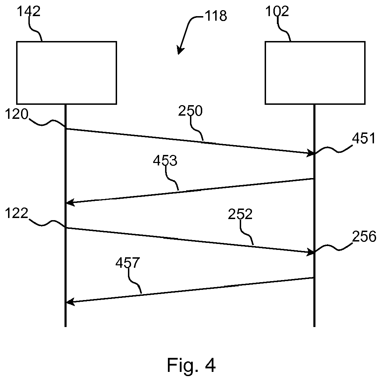

Fig. 4 schematically illustrates an example of providing a first request prior to obtaining the first primary access information 122, wherein the first request is being provided via the second communication channel 118, and wherein the first request is being provided by means of at least the second primary access information 120. This may for instance be effectuated by means of the system illustrated by means of Fig. 1 and in addition to the method illustrated by means of Fig. 2. The method of Fig. 4 comprises:
- providing 250 the second primary access information (such as a scan of a QR code identifying the first meter system 112 (see Fig. 1));
- constructing 451 a first request (a request may also be referred to as a challenge) based on the second primary access information and possibly also the first verification information;
- providing 453 the first request to the user (by means of the accessing device 142);
- providing 252 the first primary access information;
- comparing 256 the first primary access information with the first primary verification information for determining whether to authorise access;
- providing 457 access result to the user / accessing device 142.

The method and/or the system according to the present invention may for example be effectuated by utilising a district heating network, e.g. comprising a cloud computing system (i.e. comprising the data system) that aggregates meter data (i.e. consumption data) for each house or residency, and provides data access for the heat utility company, to use for e.g. billing, operation optimization and fault-detection purposes.

Meter data may be communicated to the cloud system through a series of collectors, distributed strategically to provide a sufficient wireless coverage in the utility operation area. The purpose of a collector may be to receive meter data from each of the heat meters within its wireless range, and relay the data to the cloud computing system.

Each meter (or meter system) may periodically be sending a wireless broadcast message comprising the accumulated energy consumption of the device measured over the operation time of the meter. The communication channel could for example be defined by one of the protocol modes in Wireless M-Bus (EN13757), for example Mode C which specifies a typical operation of one-way periodic broadcast message transmissions from a meter device.

During the meter installation rollout, a unique QR code (second primary access information) may be assigned to each consumer site, uniquely identifying their consumption site (and e.g. thus the meter system). The consumer may e.g. by scanning the QR code desire to gain access to, among other things, detailed knowledge about their historical consumption, e.g. by means of a smartphone app which may be connected to the cloud computing system.

To ensure that only the current consumer on the consumption site is allowed access to the relevant consumption data when the QR code is scanned, a challenge-response authentication may be required, as the QR code may be permanent for the consumption site, even when consumers move in and out. The challenge (first request) reported to the consumer may be: "Please enter the current energy consumption value (first primary access information) shown in the display on meter 121269" (i.e. the meter with serial number 121269). If the challenge response (first primary access information) provided by the consumer, say 56896kWh, is within an allowed tolerance of a known or estimated value (first primary verification information), for instance 56894.2kWh, which is acquired independently through the wireless periodic data acquisition, then it may be assumed that the consumer is currently having physical access to the meter, and the access can be granted.

When the consumer is authenticated, the consumption site may be associated with a personal profile, so that the consumer does not need to go through the process again. When a consumer is authenticated, the authentication system may be set to not grant access to any other profile/consumer until the utility company revoke the present authenticated consumer, for example when the consumer moves.

Fig. 5 schematically illustrates a graph showing consumption values as a function of time (i.e. e.g. as a function of time of: {measurement and/or provision of the respective consumption value} - i.e. e.g. time of provision by the portal system and/or the data system.). The consumption values are shown as being continuously added. Accordingly, the value will only decline with time if there is a negative net consumption.

Five data points, which are marked by asterisks (*), illustrate consumption data from the first meter system as available to (e.g. received by) the data system. The data values are plotted as a function of time (i.e. e.g. time of measurement by the first meter system). The five data points are: {(t₁,v₁), (t₂,v₂), (t₃,v₃), (t₄,v₄), and (t₅,v₅)}. A simple linear function is fitted between each successive data points, i.e. between (t₁,v₁) and (t₂,v₂), etc. Accordingly, a rough estimation of the consumption value at any time between t₁ and t₅ are provided. Furthermore, a future estimate is illustrated by means of the extrapolated dashed line extending from (t₅,v₅). The extrapolated line / values may for instance be derived based on the average inclination of previous data points. Alternatively, the extrapolated line may be a continuation of the preceding inclination. It is clear that any extrapolation and/or fitting of a curve/graph to data points may not be carried out until needed or desired. It may be needed or desired for "obtaining, by means of the second primary access information and the second primary verification information, first primary verification information relating to, or comprising, at least part of the first consumption data". Accordingly, as illustrated by means of Fig. 5, the method comprises obtaining a second time t₁, t₂, etc. relating to the first primary verification information (as will become clear with the below description).

Two data points are marked with ordinal indicators (°). The data points are: {(tₐ,vₐ), and (t_{b},v_{b})}. These data points illustrate two different examples of first primary access information - each comprising a measurement data value and an associate time, such as a time of provision of the measurement value to the portal system. Alternatively, or additionally, the actual time of reading the value from the meter may be provided. However, this may in many cases be substantially identical with the time of provision of the relevant measurement value to the portal system. In any event, as illustrated by means of Fig. 5, the method comprises obtaining a first time tₐ, t_{b} relating to the first primary access information vₐ, v_{b}.

Accordingly, for the situation with the (tₐ,vₐ) data point, the first primary verification information may be obtained by obtaining the estimated consumption value vₑₐ of the line between (t₄,v₄) and (t₅,v₅) for the time tₐ. Thus, "comparing the first primary access information with the first primary verification information for determining whether to authorise access" may be carried out by comparing vₑₐ with vₐ. Accordingly, as illustrated by means of Fig. 5, the method comprises utilising the first time tₐ and the second time t₄ and a third time t₅ for comparing the first primary access information vₐ with the first primary verification information vₑₐ and/or for obtaining the first primary verification information vₑₐ.

Likewise may be carried out for the situation with the (t_{b},v_{b}) data point.

For any claim enumerating several features, several of these features may be embodied by one and the same item of hardware and/or software. The mere fact that certain measures are recited in mutually different dependent claims or described in different embodiments does not indicate that a combination of these measures cannot be used to advantage.

Although particular embodiments have been shown and described, it will be understood that they are not intended to limit the claimed invention, and it will be obvious to those skilled in the art that various changes and modifications may be made without departing from the scope of the claimed invention. The specification and drawings are, accordingly, to be regarded in an illustrative rather than restrictive sense. The claimed invention is intended to cover alternatives, modifications, and equivalents.

It should be emphasised that the term "comprises/comprising" when used in the present disclosure is taken to specify the presence of stated features, integers, steps or components but does not preclude the presence or addition of one or more other features, integers, steps, components or groups thereof.

It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims and their equivalents.

## Claims

1. A method (200, 300) for authorising access by means of an authorisation system (100) comprising: a portal system (102); an access evaluator (126); and an interface (103) to a data system (104), the portal system (102) being configured to interact with the access evaluator (126), the data system (104) being configured to be provided, via one or more first communication channels (108), with consumption data (110, 135) from a plurality of meter systems (111) comprising a first meter system (112), the consumption data comprising first consumption data (110) from the first meter system (112), the data system (104) comprising, or being configured to be provided with, via the one or more first communication channels (108), identification information (116) identifying the meter systems (111), the identification information (116) comprising second primary verification information (114) identifying the first meter system (112),
the method comprising:
- obtaining (250, 350), via a second communication channel (118) and by means of the portal system (102), second primary access information (120) being indicative of the first meter system (112);
- obtaining (252, 352), via the second communication channel (118) and by means of the portal system (102), first primary access information (122, vₐ, v_{b}) comprising at least part of the first consumption data (110);
- obtaining (254, 354), by means of the second primary access information (120) and the second primary verification information (114), first primary verification information (vₑₐ) relating to, or comprising, at least part of the first consumption data (110), wherein the first primary verification information (vₑₐ) is obtained by extracting a consumption value from the first meter system (112), or wherein the first primary verification information (vₑₐ) is a derived value from the first consumption data (110) of the first meter system (112) as accessible by the data system (104); and
- comparing (256, 356) the first primary access information (122, vₐ, v_{b}) with the first primary verification information (vₑₐ) for determining whether to authorise access.

2. A method (200, 300) according to claim 1, comprising providing (453) a first request prior to obtaining (252, 352) the first primary access information (122, vₐ, v_{b}), the first request being provided via the second communication channel (118), the first request being provided by means of at least the second primary access information (120).

3. A method (200, 300) according to any of the preceding claims, wherein the second primary verification (114) information comprises first primary location based information of, or relating to, the first meter system (112), and wherein the second primary access information (120) comprises second primary location based information of, or relating to, the first meter system (112).

4. A method (200, 300) according to any of the preceding claims, wherein the second primary verification information (114) comprises first primary identifier based information of the first meter system (112), and wherein the second primary access information (120) comprises second primary identifier based information of the first meter system (112).

5. A method (200, 300) according to any of the preceding claims, wherein the first meter system (112) comprises, or is configured to provide, a machine-readable representation of data comprising any one or any combination of: at least part of the first consumption data (110); the first primary access information (122, vₐ, v_{b}); and the second primary access information (120).

6. A method (200, 300) according to any of the preceding claims, wherein the first meter system (112) comprises one or more displays configured to display any one or combination of: at least part of the first consumption data (110); the first primary access information (122, vₐ, v_{b}); the second primary access information (120); and the machine-readable representation of data according to claim 5.

7. A method (200, 300) according to claim 5 or 6, wherein the machine-readable representation of data comprises a barcode.

8. A method (200, 300) according to any of the claims 5-7, wherein the machine-readable representation of data comprises information readable by means of radio frequencies.

9. A method (200, 300) according to any of the preceding claims, comprising: obtaining a first time (tₐ, t_{b}) relating to the first primary access information (122, vₐ, v_{b}).

10. A method (200, 300) according to claim 9, comprising utilizing the first time (tₐ, t_{b}) for comparing the first primary access information (122, vₐ, v_{b}) with the first primary verification information (vₑₐ) and/or for obtaining the first primary verification information (vₑₐ).

11. A method (200, 300) according to any of the preceding claims, comprising: obtaining a second time (t₁, t₂) relating to the first primary verification information (vₑₐ).

12. A method (200, 300) according to any of the preceding claims, wherein obtaining the first primary access information (122, vₐ, v_{b}) and/or the second primary access information (120) comprises obtaining at least one photo of a first part of the first meter system (112).

13. A method (200, 300) according to any of the preceding claims, wherein comparing the first primary access information (122, vₐ, v_{b}) with the first primary verification information (vₑₐ) comprises determining whether a first data value is equal to or within a pre-set limit of a second data value, wherein:
- the first data value is extracted or derived from the first primary access information (122, vₐ, v_{b}), and
- the second data value is extracted or derived from at least part of the first consumption data (110).

14. An authorisation system (100) for authorising access, the authorisation system comprising: a portal system (102); an access evaluator (126); and an interface (103) to a data system (104), the portal system (102) being configured to interact with the access evaluator (126), the data system (104) being configured to be provided, via one or more first communication channels (108), with consumption data (110, 135) from a plurality of meter systems (111) comprising a first meter system (112), the consumption data comprising first consumption data (110) from the first meter system (112), the data system (104) comprising, or being configured to be provided with, via the one or more first communication channels (108), identification information (116) identifying the meter systems (111), the identification information (116) comprising second primary verification information (114) identifying the first meter system (112),
the authorisation system being configured to:
- obtain (250, 350), via a second communication channel (118) and by means of the portal system (102), second primary access information (120) being indicative of the first meter system (112);
- obtain (252, 352), via the second communication channel (118) and by means of the portal system (102), first primary access information (122, vₐ, v_{b}) comprising at least part of the first consumption data (110);
- obtain (254, 354), by means of the second primary access information (120) and the second primary verification information (114), first primary verification information (vₑₐ) relating to, or comprising, at least part of the first consumption data (110), wherein the first primary verification information (vₑₐ) is obtained by extracting a consumption value from the first meter system (112), or wherein the first primary verification information (vₑₐ) is a derived value from the first consumption data (110) of the first meter system (112) as accessible by the data system (104); and
- compare (256, 356), using the access evaluator (126), the first primary access information (122, vₐ, v_{b}) with the first primary verification information (vₑₐ) for determining whether to authorise access.

15. Authorisation system (100) according to claim 14, configured to carry out the method according to any of claims 1-13.

## Patentansprüche

1. Verfahren (200, 300) zum Autorisieren eines Zugriffs mittels eines Autorisierungssystems (100), umfassend: ein Portalsystem (102); einen Zugriffsauswerter (126); und eine Schnittstelle (103) zu einem Datensystem (104), wobei das Portalsystem (102) konfiguriert ist, mit dem Zugriffsauswerter (126) zu interagieren, wobei das Datensystem (104) konfiguriert ist, über einen oder mehrere erste Kommunikationskanäle (108) mit Verbrauchsdaten (110, 135) aus einer Vielzahl von Zählersystemen (111), die ein erstes Zählersystem (112) umfassen, versorgt zu werden, wobei die Verbrauchsdaten erste Verbrauchsdaten (110) aus dem ersten Zählersystem (112) umfassen, wobei das Datensystem (104) Identifikationsinformationen (116), die die Zählersysteme (111) identifizieren, umfasst oder konfiguriert ist, über den einen oder die mehreren ersten Kommunikationskanäle (108) mit diesen versorgt zu werden, wobei die Identifikationsinformationen (116) zweite primäre Verifizierungsinformationen (114) umfassen, die das erste Zählersystem (112) identifizieren,
wobei das Verfahren Folgendes umfasst:
- Erhalten (250, 350), über einen zweiten Kommunikationskanal (118) und mittels des Portalsystems (102), zweiter primärer Zugriffsinformationen (120), die das erste Zählersystem (112) angeben;
- Erhalten (252, 352), über den zweiten Kommunikationskanal (118) und mittels des Portalsystems (102), erster primärer Zugriffsinformationen (122, vₐ, v_{b}), die zumindest einen Teil der ersten Verbrauchsdaten (110) umfassen;
- Erhalten (254, 354), mittels der zweiten primären Zugriffsinformationen (120) und der zweiten primären Verifizierungsinformationen (114), erster primärer Verifizierungsinformationen (vₑₐ), die sich zumindest auf einen Teil der ersten Verbrauchsdaten (110) beziehen oder diese umfassen, wobei die ersten primären Verifizierungsinformationen (vₑₐ) durch Extrahieren eines Verbrauchswerts aus dem ersten Zählersystem (112) erhalten werden, oder wobei die ersten primären Verifizierungsinformationen (vₑₐ) ein abgeleiteter Wert aus den ersten Verbrauchsdaten (110) des ersten Zählersystems (112) sind, wie durch das Datensystem (104) zugänglich; und
- Vergleichen (256, 356) der ersten primären Zugriffsinformationen (122, vₐ, v_{b}) mit den ersten primären Verifizierungsinformationen (vₑₐ), um zu bestimmen, ob ein Zugriff autorisiert werden soll.

2. Verfahren (200, 300) nach Anspruch 1, umfassend Bereitstellen (453) einer ersten Anfrage vor Erhalten (252, 352) der ersten primären Zugriffsinformationen (122, vₐ, v_{b}), wobei die erste Anfrage über den zweiten Kommunikationskanal (118) bereitgestellt wird, wobei die erste Anfrage mittels zumindest der zweiten primären Zugriffsinformationen (120) bereitgestellt wird.

3. Verfahren (200, 300) nach einem der vorstehenden Ansprüche, wobei die zweiten primären Verifizierungsinformationen (114) erste primäre standortbasierte Informationen des ersten Zählersystems (112) umfassen oder sich darauf beziehen und wobei die zweiten primären Zugriffsinformationen (120) zweite primäre standortbasierte Informationen des ersten Zählersystems (112) umfassen oder sich darauf beziehen.

4. Verfahren (200, 300) nach einem der vorstehenden Ansprüche, wobei die zweiten primären Verifizierungsinformationen (114) erste primäre kennungsbasierte Informationen des ersten Zählersystems (112) umfassen und wobei die zweiten primären Zugriffsinformationen (120) zweite primäre kennungsbasierte Informationen des ersten Zählersystems (112) umfassen.

5. Verfahren (200, 300) nach einem der vorstehenden Ansprüche, wobei das erste Zählersystem (112) eine maschinenlesbare Darstellung von Daten umfasst oder konfiguriert ist, eine solche bereitzustellen, umfassend ein beliebiges oder eine beliebige Kombination aus: zumindest einem Teil der ersten Verbrauchsdaten (110); den ersten primären Zugriffsinformationen (122, vₐ, v_{b}); und den zweiten primären Zugriffsinformationen (120).

6. Verfahren (200, 300) nach einem der vorstehenden Ansprüche, wobei das erste Zählersystem (112) ein oder mehrere Displays umfasst, die konfiguriert sind, ein beliebiges oder eine beliebige Kombination anzuzeigen aus: zumindest einem Teil der ersten Verbrauchsdaten (110); den ersten primären Zugriffsinformationen (122, vₐ, v_{b}); den zweiten primären Zugriffsinformationen (120); und der maschinenlesbaren Darstellung von Daten nach Anspruch 5.

7. Verfahren (200, 300) nach Anspruch 5 oder 6, wobei die maschinenlesbare Darstellung von Daten einen Barcode umfasst.

8. Verfahren (200, 300) nach einem der Ansprüche 5-7, wobei die maschinenlesbare Darstellung von Daten mittels Radiofrequenzen lesbare Informationen umfasst.

9. Verfahren (200, 300) nach einem der vorstehenden Ansprüche, umfassend: Erhalten einer ersten Zeit (tₐ, t_{b}), die sich auf die ersten primären Zugriffsinformationen (122, vₐ, v_{b}) bezieht.

10. Verfahren (200, 300) nach Anspruch 9, umfassend Verwenden der ersten Zeit (tₐ, t_{b}) zum Vergleichen der ersten primären Zugriffsinformationen (122, vₐ, v_{b}) mit den ersten primären Verifizierungsinformationen (vₑₐ) und/oder zum Erhalten der ersten primären Verifizierungsinformationen (vₑₐ).

11. Verfahren (200, 300) nach einem der vorstehenden Ansprüche, umfassend: Erhalten einer zweiten Zeit (t ₁, t₂), die sich auf die ersten primären Verifizierungsinformationen (vₑₐ) bezieht.

12. Verfahren (200, 300) nach einem der vorstehenden Ansprüche, wobei Erhalten der ersten primären Zugriffsinformationen (122, vₐ, v_{b}) und/oder der zweiten primären Zugriffsinformationen (120) umfasst, zumindest ein Foto eines ersten Teils des ersten Zählersystems (112) zu erhalten.

13. Verfahren (200, 300) nach einem der vorstehenden Ansprüche, wobei Vergleichen der ersten primären Zugriffsinformationen (122, vₐ, v_{b}) mit den ersten primären Verifizierungsinformationen (vₑₐ) umfasst, zu bestimmen, ob ein erster Datenwert gleich einem zweiten Datenwert ist oder innerhalb einer voreingestellten Grenze desselben liegt, wobei:
- der erste Datenwert aus den ersten primären Zugriffsinformationen (122, vₐ, v_{b}) extrahiert oder abgeleitet wird und
- der zweite Datenwert aus zumindest einem Teil der ersten Verbrauchsdaten (110) extrahiert oder abgeleitet wird.

14. Autorisierungssystem (100) zum Autorisieren eines Zugriffs, wobei das Autorisierungssystem umfasst: ein Portalsystem (102); einen Zugriffsauswerter (126); und eine Schnittstelle (103) zu einem Datensystem (104), wobei das Portalsystem (102) konfiguriert ist, mit dem Zugriffsauswerter (126) zu interagieren, wobei das Datensystem (104) konfiguriert ist, über einen oder mehrere erste Kommunikationskanäle (108) mit Verbrauchsdaten (110, 135) aus einer Vielzahl von Zählersystemen (111), die ein erstes Zählersystem (112) umfassen, versorgt zu werden, wobei die Verbrauchsdaten erste Verbrauchsdaten (110) aus dem ersten Zählersystem (112) umfassen, wobei das Datensystem (104) Identifikationsinformationen (116), die die Zählersysteme (111) identifizieren, umfasst oder konfiguriert ist, über den einen oder die mehreren ersten Kommunikationskanäle (108) mit diesen versorgt zu werden, wobei die Identifikationsinformationen (116) zweite primäre Verifizierungsinformationen (114) umfassen, die das erste Zählersystem (112) identifizieren,
wobei das Autorisierungssystem konfiguriert ist zum:
- Erhalten (250, 350), über einen zweiten Kommunikationskanal (118) und mittels des Portalsystems (102), zweiter primärer Zugriffsinformationen (120), die das erste Zählersystem (112) angeben;
- Erhalten (252, 352), über den zweiten Kommunikationskanal (118) und mittels des Portalsystems (102), erster primärer Zugriffsinformationen (122, vₐ, v_{b}), die zumindest einen Teil der ersten Verbrauchsdaten (110) umfassen;
- Erhalten (254, 354), mittels der zweiten primären Zugriffsinformationen (120) und der zweiten primären Verifizierungsinformationen (114), erster primärer Verifizierungsinformationen (vₑₐ), die sich auf zumindest einen Teil der ersten Verbrauchsdaten (110) beziehen oder diese umfassen, wobei die ersten primären Verifizierungsinformationen (vₑₐ) durch Extrahieren eines Verbrauchswerts aus dem ersten Zählersystem (112) erhalten werden, oder wobei die ersten primären Verifizierungsinformationen (vₑₐ) ein abgeleiteter Wert aus den ersten Verbrauchsdaten (110) des ersten Zählersystems (112) sind, wie durch das Datensystem (104) zugänglich; und
- Vergleichen (256, 356), unter Verwendung des Zugriffsauswerters (126), der ersten primären Zugriffsinformationen (122, vₐ, v_{b}) mit den ersten primären Verifizierungsinformationen (vₑₐ), um zu bestimmen, ob ein Zugriff autorisiert werden soll.

15. Autorisierungssystem (100) nach Anspruch 14, das konfiguriert ist, das Verfahren nach einem der Ansprüche 1-13 durchzuführen.

## Revendications

1. Procédé (200, 300) pour autoriser l'accès au moyen d'un système d'autorisation (100) comprenant : un système de portail (102) ; un évaluateur d'accès (126) et une interface (103) à un système de données (104), le système de portail (102) étant configuré pour interagir avec l'évaluateur d'accès (126), le système de données (104) étant configuré pour être pourvu, par le biais d'un ou plusieurs premiers canaux de communication (108), de données de consommation (110, 135) provenant d'une pluralité de systèmes de compteur (111) comprenant un premier système de compteur (112), les données de consommation comprenant des premières données de consommation (110) provenant du premier système de compteur (112), le système de données (104) comprenant, par le biais des un ou plusieurs premiers canaux de communication (108), des informations d'identification (116) identifiant les systèmes de compteur (111) ou étant configuré pour être pourvu de celles-ci, les informations d'identification (116) comprenant des secondes informations de vérification primaires (114) identifiant le premier système de compteur (112),
le procédé comprenant les étapes consistant à :
- obtenir (250, 350), par le biais d'un second canal de communication (118) et au moyen du système de portail (102), des secondes informations d'accès primaires (120) indiquant le premier système de compteur (112) ;
- obtenir (252, 352), par le biais du second canal de communication (118) et au moyen du système de portail (102), des premières informations d'accès primaires (122, vₐ, v_{b}) comprenant au moins une partie des premières données de consommation (110) ;
- obtenir (254, 354), au moyen des secondes informations d'accès primaires (120) et des secondes informations de vérification primaires (114), des premières informations de vérification primaires (vₑₐ) relatives à, ou comprenant, au moins une partie des premières données de consommation (110), dans lequel les premières informations de vérification primaires (vₑₐ) sont obtenues en extrayant une valeur de consommation du premier système de compteur (112), ou dans lequel les premières informations de vérification primaires (vₑₐ) sont une valeur dérivée des premières données de consommation (110) du premier système de compteur (112) tel qu'accessibles par le système de données (104) ; et
- comparer (256, 356) les premières informations d'accès primaires (122, vₐ, v_{b}) avec les premières informations de vérification primaires (vₑₐ) pour déterminer s'il faut autoriser l'accès.

2. Procédé (200, 300) selon la revendication 1, comprenant l'étape consistant à fournir (453) une première requête avant d'obtenir (252, 352) les premières informations d'accès primaires (122, vₐ, v_{b}), la première requête étant fournie par le biais du second canal de communication (118), la première requête étant fournie au moyen d'au moins les secondes informations d'accès primaires (120).

3. Procédé (200, 300) selon l'une quelconque des revendications précédentes, dans lequel les secondes informations de vérification primaires (114) comprennent des premières informations primaires basées sur l'emplacement du premier système de compteur (112) ou se rapportant à celui-ci, et dans lequel les secondes informations d'accès primaires (120) comprennent des secondes informations primaires basées sur l'emplacement du premier système de compteur (112) ou se rapportant à celui-ci.

4. Procédé (200, 300) selon l'une quelconque des revendications précédentes, dans lequel les secondes informations de vérification primaires (114) comprennent des premières informations primaires basées sur l'identifiant du premier système de compteur (112), et dans lequel les secondes informations d'accès primaires (120) comprennent des secondes informations primaires basées sur l'identifiant du premier système de compteur (112).

5. Procédé (200, 300) selon l'une quelconque des revendications précédentes, dans lequel le premier système de compteur (112) comprend, ou est configuré pour fournir, une représentation lisible par machine de données comprenant l'une quelconque ou une quelconque combinaison de : au moins une partie des premières données de consommation (110) ; les premières informations d'accès primaires (122, vₐ, v_{b}) ; et les secondes informations d'accès primaires (120).

6. Procédé (200, 300) selon l'une quelconque des revendications précédentes, dans lequel le premier système de compteur (112) comprend un ou plusieurs affichages configurés pour afficher l'un quelconque ou une combinaison de : au moins une partie des premières données de consommation (110) ; les premières informations d'accès primaires (122, vₐ, v_{b}); les secondes informations d'accès primaires (120) ; et la représentation lisible par machine de données selon la revendication 5.

7. Procédé (200, 300) selon la revendication 5 ou 6, dans lequel la représentation lisible par machine de données comprend un code à barres.

8. Procédé (200, 300) selon l'une quelconque des revendications 5-7, dans lequel la représentation lisible par machine de données comprend des informations lisibles au moyen de radiofréquences.

9. Procédé (200, 300) selon l'une quelconque des revendications précédentes, comprenant l'étape consistant à : obtenir un premier instant (tₐ, t_{b}) relatif aux premières informations d'accès primaires (122, vₐ, v_{b}).

10. Procédé (200, 300) selon la revendication 9, comprenant l'étape consistant à utiliser le premier instant (tₐ, t_{b}) pour comparer les premières informations d'accès primaires (122, vₐ, v_{b}) avec les premières informations de vérification primaires (vₑₐ) et/ou pour obtenir les premières informations de vérification primaires (vₑₐ).

11. Procédé (200, 300) selon l'une quelconque des revendications précédentes, comprenant l'étape consistant à : obtenir un second instant (t₁, t₂) relatif aux premières informations de vérification primaires (vₑₐ).

12. Procédé (200, 300) selon l'une quelconque des revendications précédentes, dans lequel l'étape consistant à obtenir les premières informations d'accès primaires (122, vₐ, v_{b}) et/ou les secondes informations d'accès primaires (120) comprend l'étape consistant à obtenir au moins une photo d'une première partie du premier système de compteur (112).

13. Procédé (200, 300) selon l'une quelconque des revendications précédentes, dans lequel l'étape consistant à comparer les premières informations d'accès primaires (122, vₐ, v_{b}) avec les premières informations de vérification primaires (vₑₐ) comprend l'étape consistant à déterminer si une première valeur de données est égale à ou dans une limite prédéfinie d'une seconde valeur de données, dans lequel :
- la première valeur de données est extraite ou dérivée des premières informations d'accès primaires (122, vₐ, v_{b}), et
- la seconde valeur de données est extraite ou dérivée d'au moins une partie des premières données de consommation (110).

14. Système d'autorisation (100) pour autoriser l'accès, le système d'autorisation comprenant : un système de portail (102) ; un évaluateur d'accès (126) ; et une interface (103) à un système de données (104), le système de portail (102) étant configuré pour interagir avec l'évaluateur d'accès (126), le système de données (104) étant configuré pour être pourvu, par le biais d'un ou plusieurs premiers canaux de communication (108), de données de consommation (110, 135) provenant d'une pluralité de systèmes de compteur (111) comprenant un premier système de compteur (112), les données de consommation comprenant des premières données de consommation (110) provenant du premier système de compteur (112), le système de données (104) comprenant, par le biais des un ou plusieurs premiers canaux de communication (108), des informations d'identification (116) identifiant les systèmes de compteur (111) ou étant configuré pour être pourvu de celles-ci, les informations d'identification (116) comprenant des secondes informations de vérification primaires (114) identifiant le premier système de compteur (112),
le système d'autorisation étant configuré pour :
- obtenir (250, 350), par le biais d'un second canal de communication (118) et au moyen du système de portail (102), des secondes informations d'accès primaires (120) indiquant le premier système de compteur (112) ;
- obtenir (252, 352), par le biais du second canal de communication (118) et au moyen du système de portail (102), des premières informations d'accès primaires (122, vₐ, v_{b}) comprenant au moins une partie des premières données de consommation (110) ;
- obtenir (254, 354), au moyen des secondes informations d'accès primaires (120) et des secondes informations de vérification primaires (114), des premières informations de vérification primaires (vₑₐ) relatives à, ou comprenant, au moins une partie des premières données de consommation (110), dans lequel les premières informations de vérification primaires (vₑₐ) sont obtenues en extrayant une valeur de consommation du premier système de compteur (112), ou dans lequel les premières informations de vérification primaires (vₑₐ) sont une valeur dérivée des premières données de consommation (110) du premier système de compteur (112) tel qu'accessibles par le système de données (104) ; et
- comparer (256, 356), en utilisant l'évaluateur d'accès (126), les premières informations d'accès primaires (122, vₐ, v_{b}) avec les premières informations de vérification primaires (vₑₐ) pour déterminer s'il faut autoriser l'accès.

15. Système d'autorisation (100) selon la revendication 14, configuré pour exécuter le procédé selon l'une quelconque des revendications 1-13.
